# EUROPEAN PATENT SPECIFICATION

(11) **EP 1 947 371 B1**
(45) Date of publication and mention of the grant of the patent: **18.08.2010**
(21) Application number: 06811861.1
(22) Date of filing: 17.10.2006
(51) Int. Cl.: F16H 55/36

(54) **PULLEY**
RIEMENSCHEIBE
POULIE

(30) Priority: 04.11.2005 JP 2005320877
(43) Date of publication of application: 23.07.2008
(73) Proprietor: Sanden Corporation, Isesaki-shi, Gunma 372-8502 (JP)
(72) Inventor: YAMAGUCHI, Tomomi, Isesaki-shi Gunma 372-8502 (JP); YOSHIDA, Motoaki, Isesaki-shi Gunma 372-8502 (JP); ICHINOSE, Hirokazu, Isesaki-shi Gunma 372-8502 (JP); OZAWA, Atsushi, Isesaki-shi Gunma 372-8502 (JP)
(74) Representative: Feldmeier, Jürgen
(86) International application number: PCT/JP2006/320606
(87) International publication number: WO 2007/052465

(56) References cited:
- GB-A- 970 358
- JP-A- 09 042 411
- JP-A- 2001 012 492
- JP-A- 2001 108 070
- JP-A- 2001 286 961
- JP-A- 2005 290 868
- JP-U- 07 028 258
- JP-U- 48 005 134
- US-A- 2 710 762
- US-A- 3 596 943

## Description

### TECHNICAL FIELD

The present invention relates to a pulley which is attached to a compressor for a vehicular air conditioner and rotates by belt wrapped around its outer peripheral surface, for example.

### BACKGROUND ART

As shown in Fig. 8, a generally known pulley (JP 3421619 B2) includes: a outer circumferential part 101 having cylindrical shape and on which a belt for transmitting power is wound, an extended part 102 provided so as to extend toward radial inside from the inside surface of the outer circumferential part 101; an inner circumferential part 103 having cylindrical shape and provided so as to extend toward axial direction from the inside surface side of the extended part 102; a plurality of screw holes 102a penetrating the extended part 102 in the axial direction of the pulley; a bearing 104 for mounting the inner circumferential part 103 on a driven device 110 so that the inner circumferential part 103 is capable of rotating. The screw holes 102a are disposed so that they are separated at mutual intervals in the circumferential direction. A power transmission plate 106 is fixed to the extended part 102 by a plurality of bolts 105 inserted into each screw hole 102a respectively. The power transmission plate 106 is connected to a rotational axis 111 of the driven device 110 via a hub 107. Thus, the power transmitted from the belt is transmitted to the power transmission plate 106.

Patent Abstracts of Japan JP 2001-12492 which constitutes the closest prior art discloses a power transmission having a pulley with axial through holes having counter bores. In the counter bores, threaded bushes are provided to ensure a sufficient length of the threads. A next element is fixed to the pulley by bolts which are screwed into the threaded bushes.

### DISCLOSURE OF THE INVENTION

### PROBLEM TO BE SOLVED BY THE INVENTION

In the above-described pulley, the power transmission plate 106 is fixed by the inserting bolts 105 into screw holes 102a. Thus, for the reliable fixing of the power transmission plate 106 by the bolts 105, it is necessary to make the screw holes 102a long sufficiently in its axial direction. Thus, the thick extended part 102 having thickness corresponding to the length of the screw holes 102a is needed. By this, it is difficult to plan the reducing weight of the pulley and the reducing manufacturing cost by reducing weight. Also, when the extended part 102 is machined so that the thickness of the extended part 102 except the screw holes 102 gets thin, the length in the axial direction of the screw holes 102a is secured and the weight reducing could be possible. However, the manufacturing cost raise by said machine processing.

An object of the present invention is to provide a pulley so that the length in the axial direction of the screw holes could be secured without making the thickness of the extended part big.

### MEANS FOR SOLVING THE PROBLEM

To achieve the above object, a pulley in accordance with the present invention includes a pulley body having a outer circumferential part on which a belt for transmitting power is wound, an extended part provided so as to extend toward radial inside from the inside surface side of the outer circumferential part, a cylindrically shaped inner circumferential part provided so as to extend toward axial direction from the inside surface side of the extended part, a bearing for supporting the inner circumferential part so that the inner circumferential part is capable of rotating, a plurality of through holes provided so that the through holes are disposed at mutual intervals apart in the circumferential direction, the holes penetrating the extended part in the axial direction and a screw member fixed to the pulley body, the screw member having a plurality of screw holes, extending in the axial direction, provided at the positions respectively corresponding to each through holes of the pulley body.

Thereby, since the screw holes are provided on the screw member fixed to the pulley body, it is not necessary to provide the screw holes on the pulley body itself. Thus, the length in the axial direction of the screw holes is obtained without making the thickness of the extended part thick.

### EFFECT OF THE INVENTION

According to the pulley accordance with the present invention, the length in the axial direction of the screw holes is obtained without making the thickness of the extended part thick. Therefore, it becomes possible to reduce the weight of the pulley and the manufacturing costs according to reducing weight by making the extended part thin.

The above and other objects, features, and advantages of the present invention will become more apparent from the following description and the accompanying drawings.

### BRIEF DESCRIPTION OF THE DRAWINGS

FIG. 1 is a side sectional view of a pulley showing a first embodiment of the present invention;
FIG. 2 is a sectional view of A-A line in FIG. 1;
FIG. 3 is a sectional vies of B-B line in FIG. 1;
FIG. 4 is a sectional view showing a method of assembling the pulley;
FIG. 5 is a sectional view showing a second embodiment of the present invention;
FIG. 6 is a picture seeing in the C direction in FIG. 5;
FIG. 7 is a picture seeing in the D direction in FIG. 6;

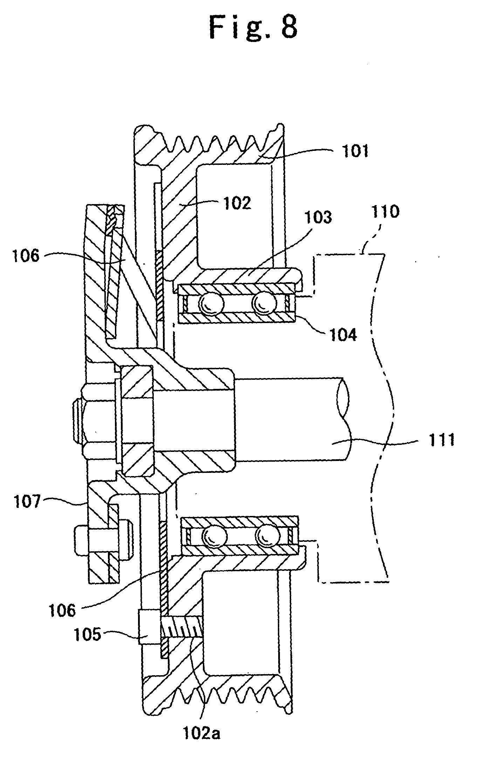

FIG. 8 is a sectional view showing a power transmission device having a traditional pulley.

### DESCRIPTION OF SYMBOLS

10 ... pulley body, 11 ... outer circumferential part, 12 ... extended part, 12a ... through hole, 12b ... mounting hole, 13 ... inner circumferential hole, 14 ... bearing, 20 ... flat plate member, 20a ... through hole, 20b ... burring part, 20c ... screw hole, 20d ... mounting hole, 30 ... rivet, 40 ... pulley body, 41 ... outer circumferential part, 42 ... extended part, 42a ... through hole, 43 ... inner circumferential part, 44 ... bearing, 50 ... nut, 50a ... protrusion, 50b ... screw hole.

### BEST MODE FOR CARRYING OUT THE INVENTION

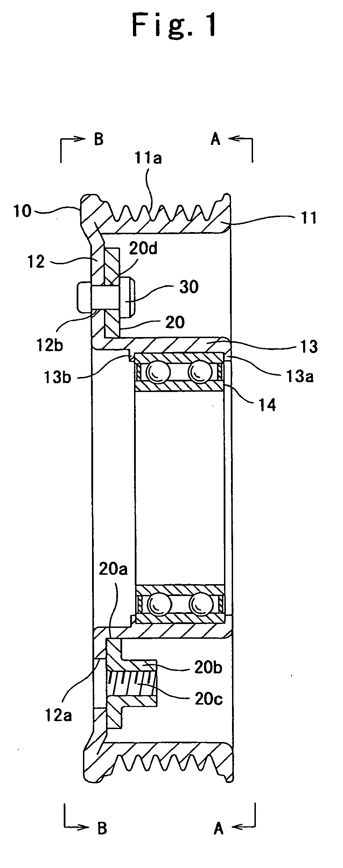

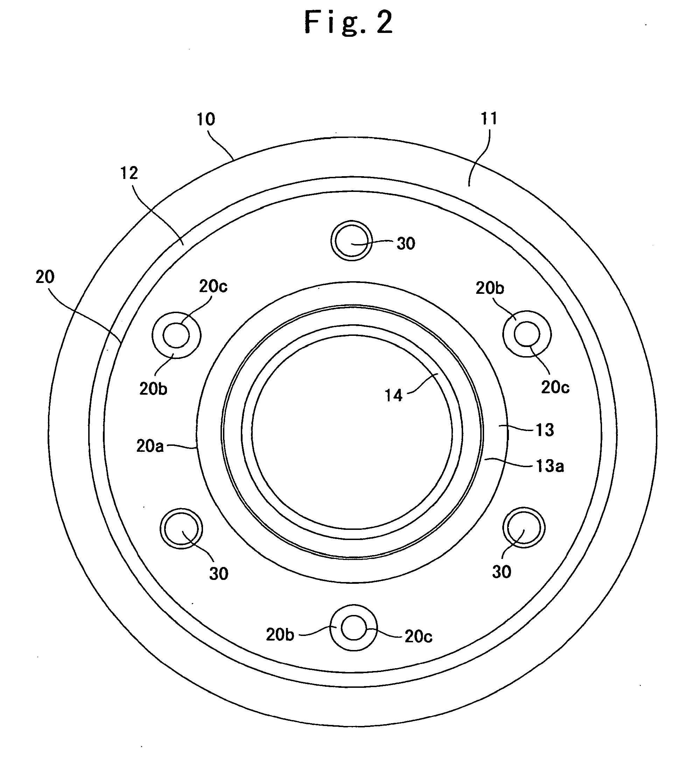

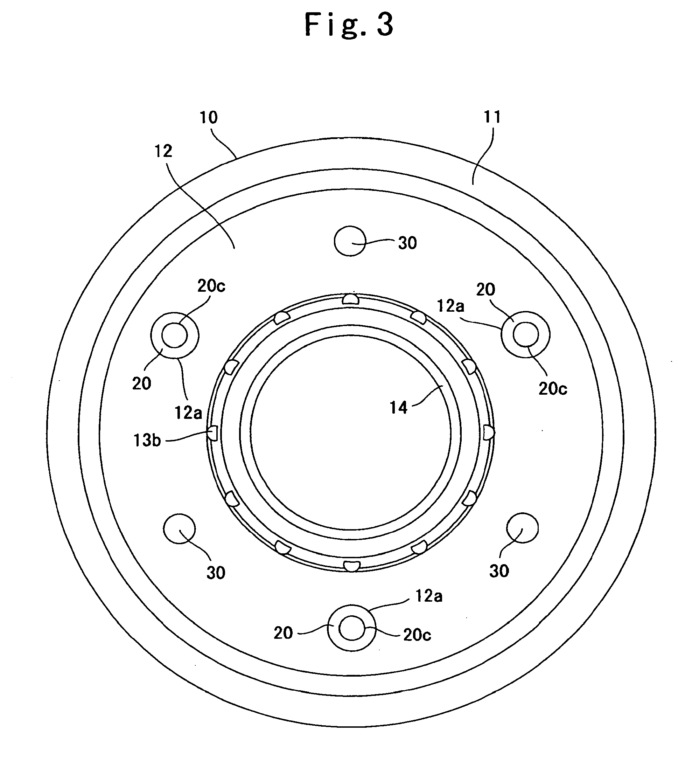

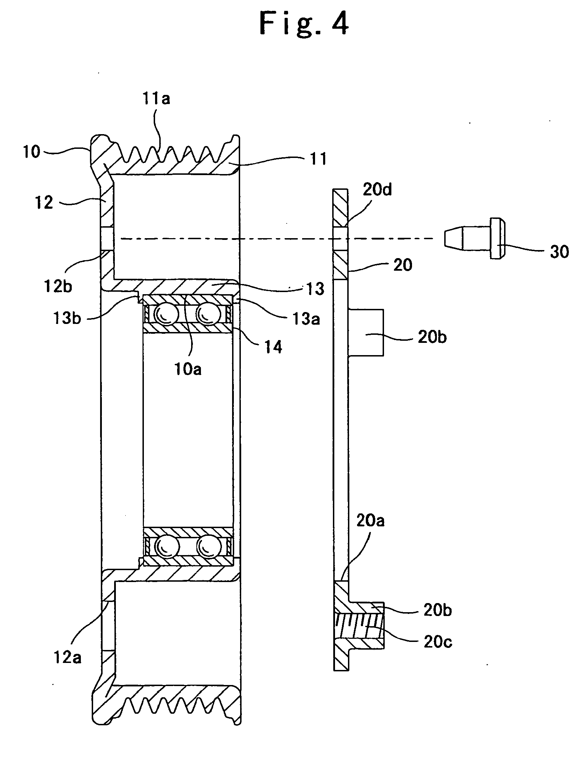

Figs. 1 to 4 show a first embodiment of the present invention. FIG. 1 is a side sectional view of a pulley showing a first embodiment of the present invention, FIG. 2 is a sectional view of A-A line in FIG. 1, FIG. 3 is a sectional vies of B-B line in FIG. 1, FIG. 4 is a sectional view showing a method of assembling the pulley.

A pulley of the first embodiment includes a pulley body 10 having a cylindrically shaped outer circumferential part 11 on which a belt (not shown) for transmitting power is wound, an extended part 12 formed so as to extend toward radial inside from the inner surface side, which is positioned at one end side in the axial direction, of the outer circumferential part 11, a cylindrically shaped inner circumferential part 13 formed so as to extend in the axial direction from the inner surface side of the extended part 12, a bearing 14 which supports the inner surface of the inner circumferential part 13 so that the inner circumferential part 13 is capable of rotating. The pulley also includes a flat plate member 20 fixed to the extended part 12.

The outer peripheral surface of the outer circumferential part 11 is provided with belt grooves 11a extending in the circumferential direction.

The extended part 12 is provided with a plurality of through holes 12a, and each through hole 12a is penetrating the extended part 12 in the axial direction. The through holes 12a are disposed at mutual interval apart in the circumferential direction. The extended portion 12 is provided with a plurality of mounting holes 12b, and the mounting holes 12b are penetrating the extended part 12 in the axial direction. The mounting holes 12b are disposed at mutual intervals apart in the circumferential direction. The through holes 12a and mounting holes 12b are arranged alternately in the circumferential direction.

A contact part 13a is provided on one axial direction end side of the inner circumferential part 13, the contact part 13a contacts one axial direction end surface of the bearing 14 in the axial direction. A plurality of caulked portions 13b are provided on the other axial direction end side of the inner circumferential part 13, the caulked portions 13b contact the other axial direction end surface of the bearing 14 in the axial direction. The caulked portions 13b are disposed at mutual intervals apart in the circumferential direction.

The flat plate member 20 is formed by carrying out the press working of the steel plate such as cold rolled steel sheet or hot rolled steel sheet, and is formed into circular plate shape. A through hole 20a is provided at the center of the flat plate member 20. The through hole is penetrating the flat plate member 20 in the axial direction of the pulley body 10, the inner diameter of the through hole 20a is a little larger than the outer diameter of the inner circumferential part 13 of the pulley body 10. A plurality of burring parts 20b are provided on the flat plate member 20. The burring parts 20b are disposed at mutual intervals in the circumferential direction, the burring parts 20b are disposed at positions corresponding to each through holes 12a respectively. The burring parts 20b are formed by providing preliminary holes on the flat plate member 20 and processing the burring work so that the vicinity of each preliminary hole is raised in the axial direction of the pulley body 10. Also, screw holes 20c are provided on each burring part 20b respectively. A plurality of mounting holes 20d are provided on the flat plate member 20. The mounting holes 20d are disposed at mutual intervals in the circumferential direction, the mounting holes 20d are penetrating the flat plate member 20 in the axial direction of the pulley body 10. Also, the mounting holes 20d are disposed at the positions corresponding to the mounting holes 12b of the pulley body 10 respectively. The flat plate member 20 is fixed to the extended part 12 of the pulley body 10 by a plurality of rivets 30 (refer to FIG. 4). The rivets 30 are inserted into each mounting holes 12b, 20d and caulked in the axial direction. The rivets 30 are corresponding to the fastening member stated in the claims.

In the pulley of above described first embodiment, a plurality of bolts (not shown) are inserted into each through holes 12a of the pulley body 10 and the bolts are fixed to each screw holes 20c of the flat plate member 20, the fixed member (not shown) is fixed to the pulley by the bolts. Since the screw holes 20c are provided on each burring part 20b, the axial length of the screw holes 20c is obtained sufficiently regardless of the thickness of the flat plate member 20. Moreover, the burring work for forming the burring parts 20b is carried out at the time of press working for forming the flat plate member 20. By this, it is possible to secure the axial length of the screw holes 20c by inexpensive working. The screw holes 20c are provided at each burring part 20b. By this, it is possible to plan the reduction of the weight of the flat plate member 20 regardless of the axial length of the screw holes 20c. Moreover, the flat plate member 20 is fixed to the pulley body 10 by the rivets 30. By this, it is possible to fix the flat plate member 20 securely to the pulley body 10 by inexpensive working.

Therefore, in the pulley of the first embodiment, the screw holes 20c are provided on the flat plate member 20 fixed to the pulley body 10. By this, since there is no need to provide screw holes on the pulley body 10, the axial length of the screw holes 20c are obtained sufficiently without making the extended part 12 thick. Thus, it becomes possible to reduce the weight of the pulley and the manufacturing costs according to reducing weight by making the extended part 12 thin.

Also, the burring parts 20b are provided on the flat plate member 20 by burring work, and the screw holes 20c are provided on each burring part 20b. By this, it is possible to secure the axial length of the screw holes 20c by inexpensive working. Also, it is possible to plan the reduction of the weight of the flat plate member 20 regardless of the axial length of the screw holes 20c. Thus, it is extremely advantageous for planning the reduction of the weight and manufacturing costs.

Also, the flat plate member 20 is fixed to the extended part 12 of the pulley body 10 by the rivets 30. By this, it is possible to fix the flat plate member 20 to the pulley body 10 securely by the inexpensive working. Thus, it is extremely advantageous for planning the reduction of the manufacturing costs of the pulley.

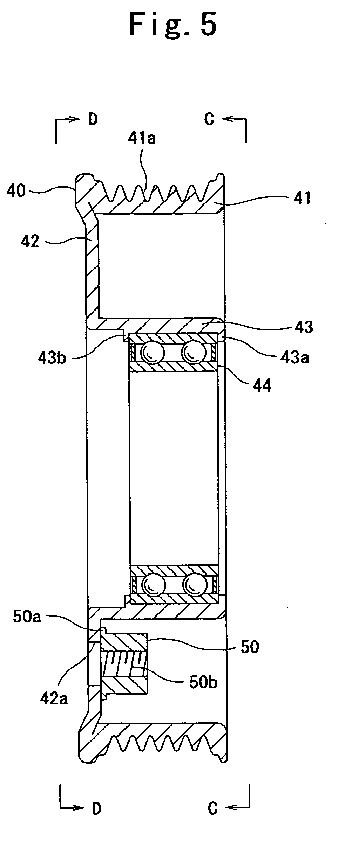

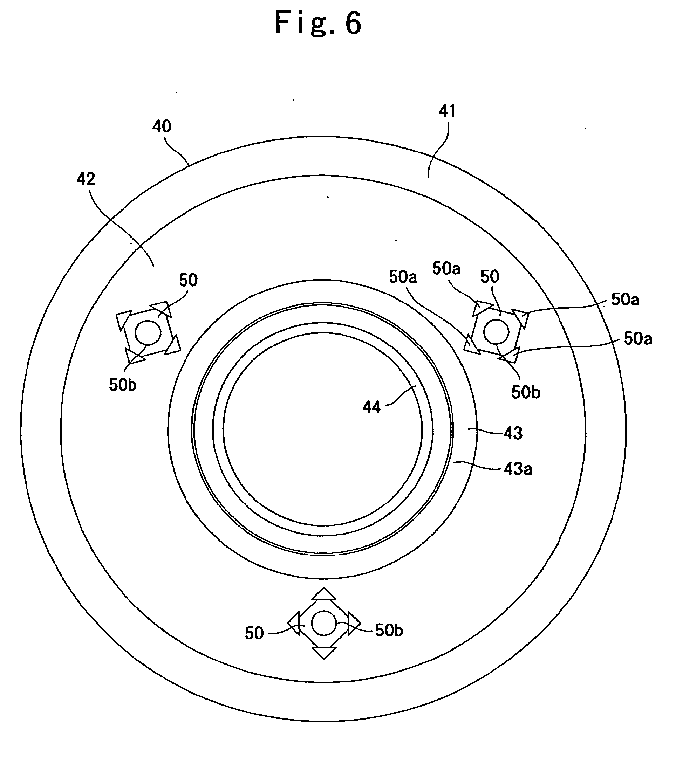

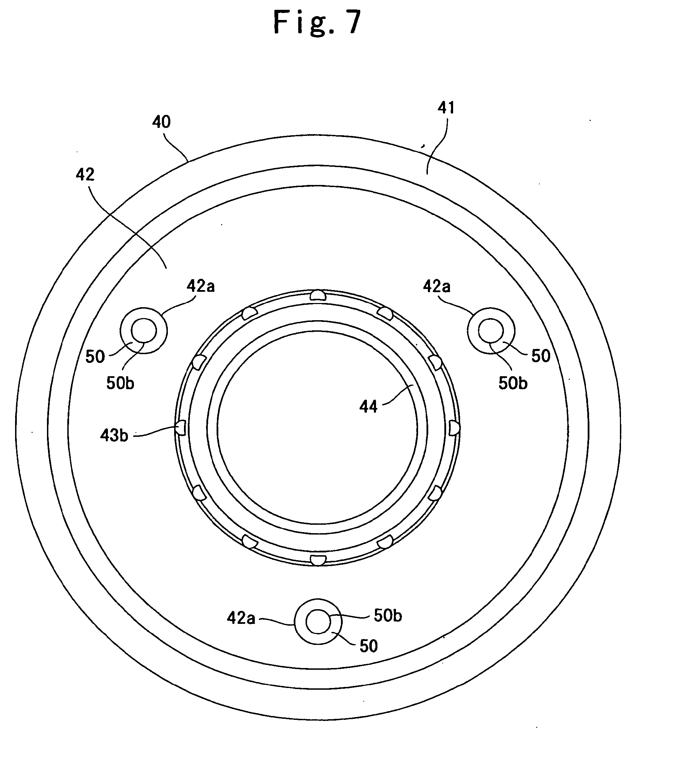

Figs. 5 to 7 show a second embodiment of the present invention. FIG. 5 is a sectional view showing a second embodiment of the present invention, FIG. 6 is a picture seeing in the C direction in FIG. 5, FIG. 7 is a picture seeing in the D direction in FIG. 6.

A pulley of the second embodiment includes a pulley body 40 having a cylindrically shaped outer circumferential part 41 on which a belt (not shown) for transmitting power is wound, an extended part 42 formed so as to extend toward radial inside from the inner surface side, which is positioned at one end side in the Axial direction, of the outer circumferential part 41, a cylindrically shaped inner circumferential part 43 formed so as to extend in the axial direction from the inner surface side of the extended part 42, a bearing 44 which supports the inner surface of the inner circumferential part 43 so that the inner circumferential part 43 is capable of rotating, and a plurality of nuts 50 fixed on the extended part 42 by projection welding.

The outer peripheral surface of the outer circumferential part 41 is provided with belt grooves 41a extending in the circumferential direction.

The extended part 42 is provided with a plurality of trough holes 42a, and each through hole 42a is penetrating the extended part 42 in the axial direction. The through holes 42a are disposed at mutual interval apart in the circumferential direction.

A contact part 43a is provided on one axial direction end side of the inner circumferential part 43, the contact part 43a contacts one axial direction end surface of the bearing 44 in the axial direction. A plurality of caulked portions 43b are provided on the other axial direction end side of the inner circumferential part 43, the caulked portions 43b contact the other axial direction end surface of the bearing 44 in the axial direction. The caulked portions 43b are disposed at mutual interval apart in the circumferential direction.

The nuts 50 are made of well-known welding nut having a plurality of projections for welding, the projections are provided at the pulley body 40 side of the nut 50. The nuts 50 are welded at the positions respectively corresponding to each through hole 42a of the extended part 42. The nuts 50 are respectively provided with a screw hole 50b formed so as to extend in the axial direction of the pulley body 40.

In the pulley of above described second embodiment, a plurality of bolts (not shown) are inserted into each though holes 42a of the pulley body 40 and the bolts are fixed to screw holes 50b of each nuts 50, the fixed member (not shown) is fixed to the pulley by the bolts. Since the screw holes 50b are provided on each nuts 50, the axial length of the screw holes 50b is obtained sufficiently regardless of the thickness of the extended part 42. Moreover, the nuts 50 are fixed on the extended part 42 of the pulley body 40 by projection welding. By this, it is possible to fix the nuts 50 to the pulley body 40 securely by inexpensive working. The nuts 50 are made of welding nut. By this, it is easy to fix the nuts 50 to the pulley body 40 by welding.

Therefore, in the pulley of the second embodiment, the screw holes 50b are respectively provided at each nut 50 fixed on the pulley body 40 by welding. By this, since there is no need to provide screw holes on the pulley body 40, the axial length of the screw holes 50b are obtained sufficiently without making the extended part 42 thick. Thus, it becomes possible to reduce the weight of the pulley and the manufacturing costs according to reducing weight by making the extended part 42 thin.

Also, the nuts 50 are fixed to the pulley body 40 by welding, and the screw holes 50b are provided on each nut 50. Thus, the axial length of the screw hole 50b are changed by changing the axial length of the nut 50. therefore, it is advantageous for securing the length of the screw holes 50b.

Moreover, The nuts 50 are fixed to the pulley body 40 by projection welding. Thus, it is possible to fix the nuts 50 to the pulley=body 40 securely by inexpensive working. Therefore, it is advantageous for planning reduction of manufacturing costs of the pulley.

Also, the nuts 50 are made of welding nut. Thus, it is easy to fix the nuts 50 to the pulley body 40 by welding. Therefore, it is advantageous for planning reduction of manufacturing costs of the pulley.

Furthermore, in the second embodiment, the nuts 50 are fixed to the pulley body 40 by projection welding. On the other hand, it is possible to fix the nuts 50 to the pulley body 40 by well known other welding methods.

The preferred embodiments described in this specification are illustrative and not restrictive. The scope of invention is given by the appended claims, and all changes and modifications included in the meaning of claims are embraced in the present invention.

## Claims

1. A pulley comprising:
a pulley body (10) having an outer circumferential part (11) on which a belt for transmitting power is wound, an extended part (12) provided so as to extend toward radial inside from the inside surface side of the outer circumferential part, a cylindrically shaped inner circumferential part (13) provided so as to extend toward axial direction from the inside surface side of the extended part, a bearing (14) for supporting the inner circumferential part (13) so that the inner circumferential part (13) is capable of rotating, a plurality of through holes (12a) provided so as to be disposed at mutual interval apart in the circumferential direction, the through holes (12a) penetrating the extended part (12) in the axial direction,
**characterized in that** a flat plate member (20) is fixed to the pulley body (10) by a plurality of rivets (30), and a plurality of raised portions (20b), are provided on the flat plate member (20), wherein the raised portions (20b) are disposed at positions corresponding to each through hole (12a) of the pulley body (10), and
wherein the raised portions (20b) are formed by providing preliminary holes on the flat plate member (20) and processing the burring work so that the vicinity of each preliminary hole is raised in the axial direction of the pulley body (10), wherein
the inner surface of each of the raised portions (20b) is provided with screw portion.

2. A pulley comprising:
a pulley body (40) having an outer circumferential part (41) on which a belt for transmitting power is wound, an extended part (42) provided so as to extend toward radial inside from the inside surface side of the outer circumferential part, a cylindrically shaped inner circumferential part (43) provided so as to extend toward axial direction from the inside surface side of the extended part, a bearing (44) for supporting the inner circumferential part (43) so that the inner circumferential part (43) is capable of rotating, a plurality of through holes (42a) provided so as to be disposed at mutual interval apart in the circumferential direction, the through holes (42a) penetrating the extended part (42) in the axial direction, and
a plurality of nuts (50) is provided, and
a plurality of screw holes (50b) is provided on each nut (50), respectively,
wherein the screw holes (50b) are provided so as to extend in the axial direction of the pulley body (40), wherein
the plurality of nuts (50) is disposed at positions corresponding to each through hole (42a) of the pulley body (40); and
the screw holes (50b) are disposed at positions correspending to each hole (42a) of the pulley body (40),
**characterized in that** the plurality of nuts (50) is fixed to the pulley body (40) by welding.

3. The pulley according to claim 2, wherein
the nuts (50) are fixed on the pulley body (40) by projection welding.

4. The pulley according to claim 3, wherein
the nuts (50) are made of welding nuts.

## Patentansprüche

1. Riemenscheibe, aufweisend:
einen Riemenscheibenkörper (10), der einen äußeren Umfangsabschnitt (11), auf den ein Riemen zum Übertragen von Energie gewunden ist, einen sich erstreckenden Abschnitt (12), der vorgesehen ist, um sich von der inneren Oberflächenseite des äußeren Umfangsabschnitts zu einem radial Inneren hin zu erstrecken, einen zylindrisch geformten inneren Umfangsabschnitt (13), der vorgesehen ist, um sich von der inneren Oberflächenseite des sich erstreckenden Abschnitts zu einer axialen Richtung hin zu erstrecken, ein Lager (14) zum Lagern des inneren Umfangsabschnitts (13), so dass der innere Umfangsabschnitt (13) in der Lage ist, sich zu drehen, eine Mehrzahl von Durchgangslöchern (12a), die vorgesehen sind, um in der Umfangsrichtung in gegenseitigen Abständen getrennt angeordnet zu sein, hat, wobei die Durchgangslöcher (12a) den sich erstreckenden Abschnitt (12) in der axialen Richtung durchdringen,
**dadurch gekennzeichnet, dass**
ein flaches Plattenelement (20) an dem Riemenscheibenkörper (10) durch eine Mehrzahl von Nieten (30) befestigt ist, und eine Mehrzahl von erhabenen Abschnitten (20b) auf dem flachen Plattenelement (20) vorgesehen sind, wobei die erhabenen Abschnitte (20b) an Positionen, die mit jedem Durchgangsloch (12a) des Riemenscheibenkörpers (10) übereinstimmen, angeordnet sind, und
wobei die erhabenen Abschnitte (20b) durch Vorsehen von vorbereitenden Löchern auf dem flachen Plattenelement (20) und Ausführen der Kragenformarbeit, so dass die Umgebung von jedem vorbereitenden Loch in der axialen Richtung des Riemenscheibenkörpers (10) angehoben wird, geformt werden,
wobei
die innere Oberfläche von jedem der erhabenen Abschnitte (20b) mit einem schraubenförmigen Abschnitt versehen ist.

2. Riemenscheibe, aufweisend
einen Riemenscheibenkörper (40), der einen äußeren Umfangsabschnitt (41), auf den ein Riemen zum Übertragen von Energie gewunden ist, einen sich erstreckenden Abschnitt (42), der so vorgesehen ist, um sich von der inneren Oberflächenseite des äußeren Umfangsabschnitts zu einem radial Inneren hin zu erstrecken, einen zylindrisch geformten inneren Umfangsabschnitt (43), der vorgesehen ist, um sich von der inneren Oberflächenseite des sich erstreckenden Abschnitts zu einer axialen Richtung hin zu erstrecken, ein Lager (44) zum Lagern des inneren Umfangsabschnitts (43), so dass der innere Umfangsabschnitt (43) in der Lage ist, sich zu drehen, eine Mehrzahl von Durchgangslöchern (42a), die vorgesehen sind, um in der Umfangsrichtung in gegenseitigen Abständen getrennt zu sein, hat, wobei die Durchgangslöcher (42a) den sich erstreckenden Abschnitt (42) in der axialen Richtung durchdringen, und
eine Mehrzahl von Schraubenmuttern (50) vorsehen ist, und
eine Mehrzahl von Schraublöchern (50b) jeweils auf jeder Schraubenmutter (50) vorgesehen ist,
wobei die Schraublöcher (50b) vorgesehen sind, um sich in der axialen Richtung des Riemenscheibenkörpers (40) zu erstrecken,
wobei
die Mehrzahl der Schraubenmuttern (50) an Positionen angeordnet ist, die mit jedem Durchgangsloch (42a) des Riemenscheibenkörpers (40) übereinstimmen, und
die Schraublöcher (50b) an Positionen, die mit jedem Loch (42a) des Riemenscheibenkörpers (40) übereinstimmen, angeordnet sind, **dadurch gekennzeichnet, dass**
die Mehrzahl der Schraubenmuttern (50) an dem Riemenscheibenkörper (40) durch Schweißen befestigt ist.

3. Riemenscheibe gemäß Anspruch 2, wobei die Schraubenmuttern (50) auf dem Riemenscheibenkörper (40) durch Buckelschweißen befestigt sind.

4. Riemenscheibe gemäß Anspruch 3, wobei die Schraubenmuttern (50) aus Schweißmuttern hergestellt sind.

## Revendications

1. Poulie comprenant :
un corps de poulie (10) ayant une partie circonférentielle externe (11) sur laquelle est enroulée une courroie destinée à transmettre de la puissance, une partie étendue (12) pourvue de sorte à s'étendre vers une partie intérieure radiale depuis le côté de la surface intérieure de la partie circonférentielle externe, une partie circonférentielle interne (13) de forme cylindrique pourvue de sorte à s'étendre vers une direction axiale depuis le côté de la surface intérieure de la partie étendue, un palier (14) pour soutenir la partie circonférentielle interne (13) de sorte que la partie circonférentielle interne (13) soit capable de tourner, une pluralité de trous traversant (12a) pourvus de sorte à être disposés à intervalle mutuel à l'écart dans la direction circonférentielle, les trous traversant (12a) pénétrant la partie étendue (12) dans la direction axiale,
**caractérisée en ce qu'**un élément de plaque plate (20) est fixé au corps de poulie (10) par une pluralité de rivets (30), et une pluralité de parties surélevées (20b), sont pourvues sur l'élément de plaque plate (20), où les parties surélevées (20b) sont disposées à des positions correspondant à chaque trou traversant (12a) du corps de poulie (10), et
où les parties surélevées (20b) sont formées en fournissant des trous préliminaires sur l'élément de plaque plate (20) et en traitant le travail d'ébavurage de sorte que les environs de chaque trou préliminaire soient surélevés dans la direction axiale du corps de poulie (10), où
la surface interne de chacune des parties surélevées (20b) est pourvue d'une partie à vis.

2. Poulie comprenant :
un corps de poulie (40) ayant une partie circonférentielle externe (41) sur laquelle est enroulée une courroie destinée à transmettre de la puissance, une partie étendue (42) pourvue de sorte à s'étendre vers une partie intérieure radiale depuis le côté de la surface intérieure de la partie circonférentielle externe, une partie circonférentielle interne (43) de forme cylindrique pourvue de sorte à s'étendre vers une direction axiale depuis le côté de la surface intérieure de la partie étendue, un palier (44) pour soutenir la partie circonférentielle interne (43) de sorte que la partie circonférentielle interne (43) soit capable de tourner, une pluralité de trous traversant (42a) pourvus de sorte à être disposés à un intervalle mutuel à l'écart dans la direction circonférentielle, les trous traversant (42a) pénétrant la partie étendue (42) dans la direction axiale, et
une pluralité d'écrous (50) sont pourvus, et
une pluralité de trous de vis (50b) sont pourvus sur chaque écrou (50), respectivement,
où les trous de vis (50b) sont pourvus de sorte à s'étendre dans la direction axiale du corps de poulie (40),
où
la pluralité d'écrous (50) sont disposés à des positions correspondant à chaque trou traversant (42a) du corps de poulie (40) ; et
les trous de vis (50b) sont disposés à des positions correspondant à chaque trou (42a) du corps de poulie (40),
**caractérisée en ce que** la pluralité d'écrous (50) sont fixés au corps de poulie (40) par soudure.

3. Poulie selon la revendication 2, dans laquelle
les écrous (50) sont fixés sur le corps de poulie (40) par soudure par projection.

4. Poulie selon la revendication 3, dans laquelle
les écrous (50) sont faits d'écrous de soudure.
